# EUROPEAN PATENT SPECIFICATION

(11) **EP 0 492 014 B1**
(45) Date of publication and mention of the grant of the patent: **20.03.1996**
(21) Application number: 90314389.9
(22) Date of filing: 28.12.1990
(51) Int. Cl.: G05B 19/18

(54) **Automatic grinding apparatus**
Automatische Schleifvorrichtung
Appareil automatique pour abraser

(43) Date of publication of application: 01.07.1992
(73) Proprietor: AIKO ENGINEERING CO. LTD., Tokyo 141 (JP)
(72) Inventor: Yonaha, Seishu, c/o Aiko Engin. Co. Ltd., Shinagawa-ku, Tokyo 141 (JP); Chin, Meitoku, c/o Aiko Engin. Co. Ltd., Shinagawa-ku, Tokyo 141 (JP); Yatsuda, Kenichi, c/o Aiko Engin. Co. Ltd., Shinagawa-ku, Tokyo 141 (JP)
(74) Representative: Horner, Martin Grenville

(56) References cited:
- EP-A- 0 331 265
- EP-A- 0 359 378
- US-A- 3 896 360
- US-A- 4 451 187
- US-A- 4 516 212

## Description

This invention relates to an automatic grinding apparatus used for finishing a work piece by removing excess weld metal, deburring or chamferring.

An automatic grinding apparatus for finishing a work piece by removing excess weld metal, deburring or chamferring is known from Japanese Patent Application Laid Opened No. Hei 1-121169. The apparatus comprises an electronic grinder whose motor load current decreases or increases due to the metal removal quantity per unit hour, a slider supporting the grinder, a sliding device elevating the slider, a travelling truck and rails. The travelling truck runs parallel to the grinding line (of the excess weld metal or weld reinforcement) on the rails at a constant speed. A pinion projects from the bottom of the travelling truck to engage a rack provided on the guide rails. A travelling motor, which is contained in the travelling device, rotates the pinion through a speed reduction device to move the truck along the longitudinal direction of the rails at a constant speed. The sliding device controls the perpendicular distance between the electronic grinder and the excess metal welding. A supporting block contained in the slider is threaded to engage an output shaft of the slide elevation motor which is provided at the upper end of the device to elevate the slider by rotation of the elevation motor. The electronic grinder is attached by a holder provided at the front portion of the slider.

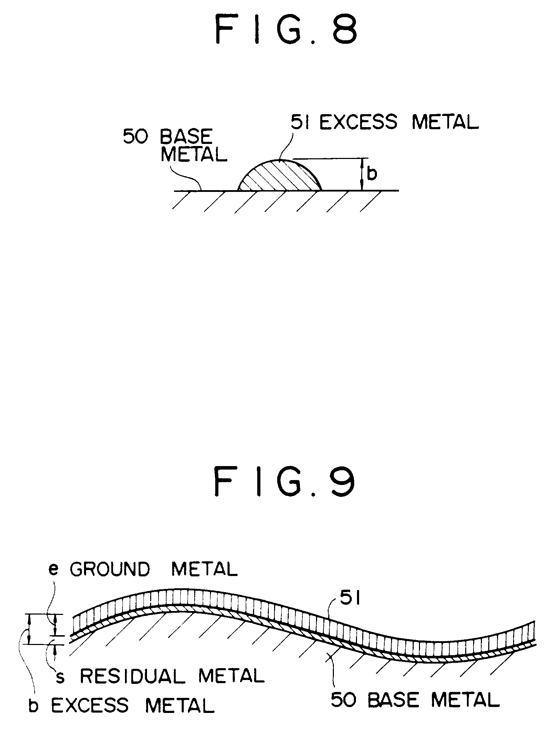

When the truck travels at a constant speed along the grinding line (of the excess weld metal), the slide device is so controlled that the motor load current of the grinder is maintained constant, so that the metal removal rate (mm³\min) is always kept constant even if the abrasive grinding disk is exhausted. Therefore, in case of excess metal having a cross-section as shown in Fig. 8, substantially uniformly distributed along the welding line as shown in Fig. 9, even if the base metal surface is deformed, equal finishing over such deformed surface is performed. Further since the apparatus is not affected by gravity as occurs in a system for controlling the grinding pressure, there is an advantage that the controlling capacity is stable for any grinding attitude such as facing in a horizontal direction or a vertical direction.

In actuating the above described apparatus at the initiation of grinding, it is necessary to start the rotation of the grinding motor in a condition such that the grinding disk does not contact the object to be ground. Thereafter any of three operating systems described hereinbelow will happen;
(A) Start the slide controlling circuits (not shown) and the travelling truck simultaneously.
(B) Start only the slide controlling circuit at first, and then the travelling switch is operated when the grinding process starts, after the sliding device has automatically moved down to contact the object, due to the low grinding motor load current.
(C) Move down the sliding device by switch operation, and then start both the sliding controlling circuit and the travelling truck at the time of starting the grinding process.

In the above described systems, (A) is automatically actuated by an external command, however an unground portion remains at the point of grinding initiation. (B) and (C) are utility systems where no unground portions remain, however the switch control requires monitoring by a person.

In the above described travelling truck system, since the actuation of the system at the start of grinding depends on a human being, it is not a great problem that monitoring is required. When grinding a plurality of portions of excess weld metal by program control in which a robot is used as the travelling device, since the system is also automatically actuated at the start of grinding by an actuation signal, the residual phenomenon of an unground portion is inevitable in such a conventional system. In case of grinding all of the excess weld metal to the extent of grinding to the ridgeline thereof, it is also inevitable that the grinding disk comes into collision with the object to be ground when the robot reaches the next grinding initiation, since the sliding device is moved down at said ridgeline by a slide control faculty.

In the same way when the robot reaches the next grinding initiation after a new grinding disk is fitted, it is also inevitable that the new grinding disk comes into collision with the object to be ground since the sliding device automatically moves down due to the exhaustion of the disk. Further when the grinding motor is stopped whilst still grinding to finish the grinding process, the disk intrudes into the object to be ground due to a rotational inertia of the motor, and the base metal surface is damaged.

The object of the present invention is to provide an improved automatic grinding apparatus which substantially prevents the grinding disk from coming into contact with or intruding into the object to be ground, or damaging the base metal surface when a robot is used as the travelling device for an electronic grinder.

According to the present invention, an automatic grinding apparatus utilizing:
a rotating grinder comprising a grinding motor and a grinding disk actuated by said grinding motor, said grinding motor having substantially no variation in RPM due to variation of load on said grinding disk, and a load current which is proportional to metal removal rate, characterized in that the apparatus includes;
a travelling device in the form of an articulated type or a cartesian co-ordinate type industrial robot having a wrist means thereon;
a sliding device attached to said wrist means of the industrial robot and said sliding device on said robot comprising an elevation motor for adjusting the distance between said grinding disk and said surface of the workpiece to be ground and a slider actuated by said elevation motor and supporting said grinder at the front surface thereof for raising and lowering said grinder, said sliding device being capable of actuation independently of said travelling device;
a programmable controller for controlling said grinder and sliding device to start and stop the control thereof and to recover to a home position;
timer means for generating a signal for actuating said sliding device to move said grinding disk towards the workpiece after the slip current of said grinding motor becomes stable at initiation of grinding;
detecting means outputting a driving signal to said travelling device simultaneously with or after a time delay after detecting that said disk has contacted said surface to be ground due to the variation of the load current of said grinding motor; and
means for recovering the relative location of said disk and said sliding device to said home condition following an indication from the controller.

The automatic grinding apparatus of the present invention preferably further comprises means for fixing or halting a control faculty of the sliding device at an optional time during grinding so as to maintain the relative positions of the grinder and the sliding device in a selected state, and means for stopping rotation of the grinding motor and actuating the sliding device to a position where the grinder is kept apart from the object to be ground at the end of the grinding process.

In the automatic grinding apparatus of the present invention noise is preferably removed by a smoothing circuit after the load current of the electronic grinder is detected and converted to direct current by a rectifier circuit. The output of the smoothing circuit is compared with a set current level by a comparator and the elevation motor is actuated to elevate the grinder to approach or to be apart from the work piece respectively due to the variation of the load current, which is smaller or bigger than the set current level. Since the load current of the electronic grinder is kept constant, a certain quantity of the excess metal can be ground away so far as the travelling speed of the grinder is constant. Therefore in the case when the height and the width over the whole length of the welding seam is constant (as in an automatically welded bead), even if the base metal surface is deformed along the welding seam, the excess weld metal can be automatically ground away along the base metal surface.

It is possible to control the load current of the grinder to be kept constant by the industrial robot. However, since the weight of the robot body is large and the robot has a lack of rigidity at the articulated portion thereof, the wrist portion there is necessarily late for following up thereafter. In comparison therewith, in the present invention, while the robot is utilized as the travelling device, the sliding device is attached to the wrist portion of the robot and a light grinder is controlled in one axis of the sliding direction, so that the following capacity of the grinding disk is improved.

Further, since the single axis sliding device is attached to the wrist portion of the robot and can follow the surface of the workpiece up to the exhaustion of the grinding disk and to the deformed surface of the base metal, the robot body need not to be controlled specifically except for moving the wrist thereof along the grinding line.

Embodiments of the invention will now be described by way of example only in conjunction with the drawings wherein:
Fig. 1 is a front view of an automatic grinding apparatus made in accordance with the present invention;
Fig. 2 is a diagrammatic view of the control circuit of the apparatus in accordance with the present invention;
Fig. 3 is a vertical section view of a plurality of portions of the excess metal to be ground away in accordance with the present invention;
Fig. 4 and 5 are enlarged vertical section views of the excess weld metal having an irregularity along the seam to be ground;
Fig. 6 is an operation time chart at time of actuating the apparatus made in accordance with the present invention;
Fig. 7 is a time chart showing each operation of the apparatus made in accordance with the present invention such as the recovery to the initial point, the starting, the controlling, the halting of the controlling and the stopping;
Fig. 8 is a cross section view of the excess weld metal to be ground in accordance with the present invention; and
Fig. 9 is a vertical section view of the excess weld metal to be ground in accordance with the present invention.

### DETAILED DESCRIPTION OF THE PREFERRED EMBODIMENTS

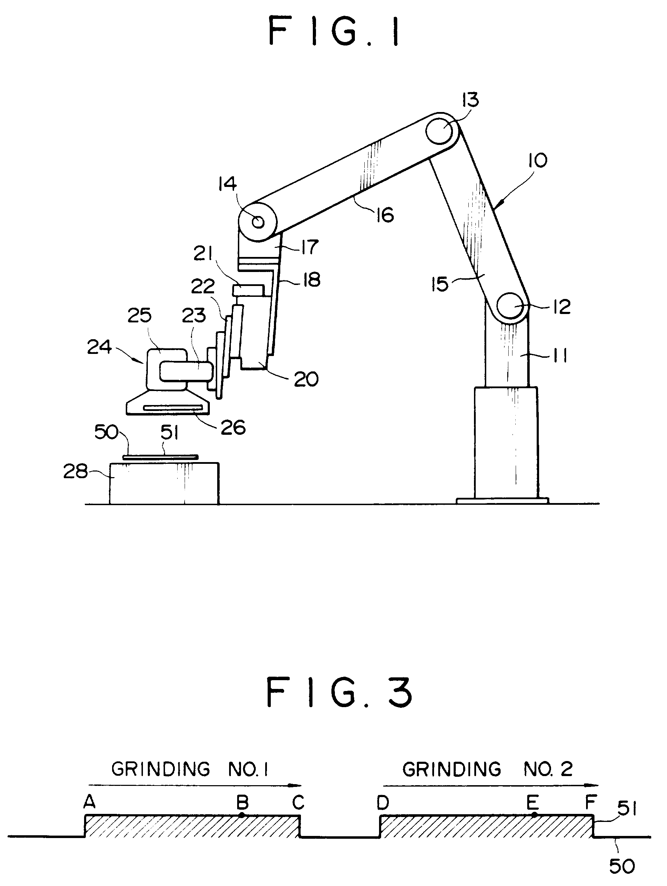

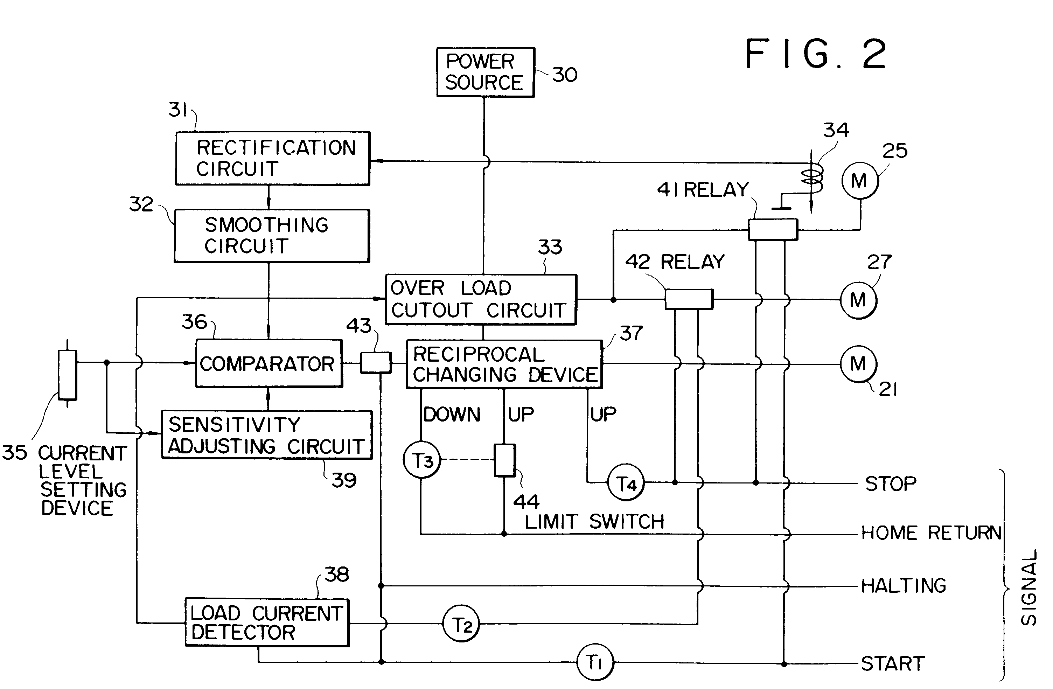

Fig. 1 is a front view of the apparatus made in accordance with the present invention and Fig. 2 is a diagrammatic view of the control device of the apparatus.

An articulated-type robot 10 is used for actuating an end arm 17 three-dimensionally through several joints 12, 13, 14 and arms 15, 16 provided at the upper portion of a column 11. As shown in Fig. 1, a sliding device 20 is secured to the end arm 17 and a turning plate 23 providing a wrist-like structure is provided at a slider 22 for mounting a constant speed rotating grinder 24. The electronic grinder 24 comprises a motor 25 and a grinding stone disk 26. The sliding device 20 comprises an elevation motor 21 provided at the upper portion thereof and a supporting block threaded to engage the output shaft of the motor. The grinding disk 26 is disposed at the upper portion of excess weld metal 51 (see Fig. 8) of a workpiece 50 set on a frame 28 and is controlled by a predetermined program to grind the excess metal.

Fig. 2 is a block diagram of a control circuit in which an alternating current reversible motor is used for the elevation motor 21.

The control circuit includes timer means generating a signal for actuating the sliding device 20 to have the grinding disk 26 approach the grinding surface after the slip current of the grinding motor becomes stable at grinding initiation when the grinding motor 25 is actuated; a detecting means outputting the driving signal to the travelling device simultaneously with or having a time lag after detecting that the disk 26 has contacted the metal surface to be ground, due to the variation of the load current of the grinding motor 25; and means for recovering the relative location of the disk 26 and the sliding device 20 to a home position by regulating an actuating time of the elevation motor 21 before and after the grinding process.

The grinder motor 25, the travelling motor 27 and the elevation motor 21 of the electronic grinder 24 are actuated through an overload cutout circuit 33 by a power source 30(100v alternating current, for example). Travelling motors 27 (motors for swinging or rotating each rotating joint (articulation) provided on a wrist, a shoulder, an elbow portion or the like of the robot) are actuated in accordance with a signal from the robot controller (not shown) and the grinding disk 26 of the electric grinder, which is attached through the sliding device 20 and the wrist, is moved towards the surface to be ground.

As described above, in spite of the metal removal quantity per unit hour, the motor 25 of the electronic grinder 24 keeps its rotation frequency constant by the electronic control device (not shown). Variations in the load current of the motor 25 are detected at a current detector 34 to indicate by a load current indication scale through a rectification circuit 31 and a smoothing circuit 32 and transferred to a comparator 36. The comparator 36 compares said load current with the current value which is preliminarily set at a current value setting device 35, when an absolute value of the difference resulting from said comparison exceeds the value predetermined by a sensitivity adjusting circuit 39 and said comparator actuates a reciprocal changing device 37 to allow the elevation motor 21 to rotate normally or reversely according to a positive or a negative difference.

Recovering means for returning the sliding device to the initial point or home position comprises the reciprocal changing device 37 to allow the elevation motor 21 to rotate normally or reversely according to a signal from the programmable controller (not shown) to recover to the home position, the limit switch 44 for detecting the upper limit point of the slider 22 and the timer to actuate the elevating motor 21 so as to lower the sliding device 22 from the upper limit point for a predetermined period. In said recovering means it is possible that the location of the slider 22 in the sliding device is directly detected by a potentiometer (not shown) and the elevating motor 21 may be actuated for controlling the location of said sliding device to a certain condition.

Unlike oxidation scaling of a steel plate, the weld reinforcement has the deformed surface locally at the joint of the welding bead and accordingly there is a danger that during the apparatus travel to grind the grinding line, the high speed rotating disk collides with the surface of the object and the surface is damaged. Therefore the overload breaker 33 is provided for actuation when the load current of the motor of the electronic grinder exceeds a limit value in case of emergency.

When the load current of the motor 25 of the electronic grinder exceeds a limit value, the overload cutout circuit 33 actuates to cut off the power source 30 and rotation of each of the motor 25, the travelling motor 27 and the elevation motor 21 is stopped to preliminarily prevent burning of the grinder and damage of the grinding disk.

Other that the elements described above, the following elements are shown in Fig. 2, that is, terminals receiving each signal from the robot control device such as actuating, halting the control, recovering to the initial or home point and stopping, a load current detector 38, timers T₁ to T₄, relays 41 to 43 and a limit switch 44, and these elements will be described hereinafter.

The signal actuates the relay 41 to start the rotation of the grinding motor 25 while the operation of the relay 43, delayed by the timer T₁, lowers the slide using the elevation motor 21. At this time, the load detecting circuit 38 disregards the smoothed load current of the grinder motor 25 and from the moment of said load current exceeding a certain value, the delay in turning off the relay 42 for starting the travelling motor 27 is controlled by timer T₂.

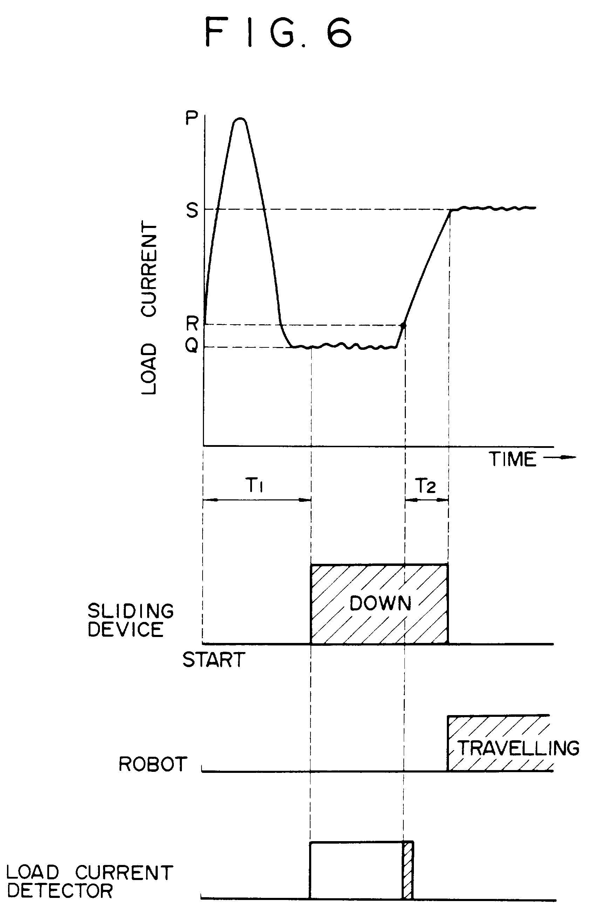

The above starting operation is shown in Fig. 6 in respect of the load current of the grinding motor. The load current of the grinding motor 25 rapidly rises to P after starting and goes down to Q when the rotation of the motor reaches a nominal speed and stabilises. When the slide is lowered after the delay introduced by timer T₁, simultaneously the load detecting circuit 38 starts monitoring. The load current rises again when the grinding disk contact the object to be ground and from the moment of the current exceeds the threshold value R, the load detecting circuit delays starting the travelling motor 27 in proportion to delay introduced by the timer T₂. In respect of the above, T₁ is substantially constant (about 2 seconds is normal), while T2 varies due to the load set value S. That is, to prevent an unground portion remaining, T₂ is set large when the value S is large and to prevent excess grinding. T₂ is set to be close O when the value S is small.

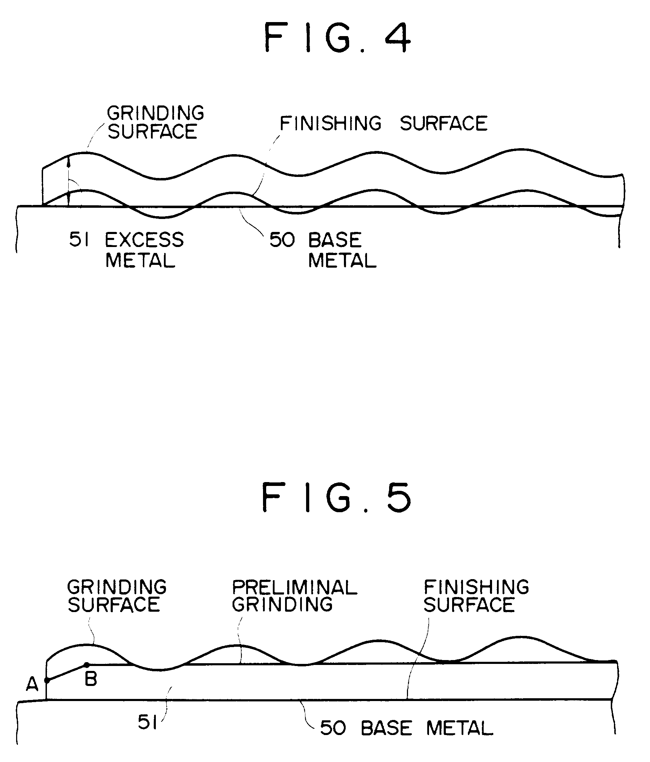

The relay 43 is turned off when a signal for halting of fixing the sliding control is input, such that the respective relative positions of the sliding device and the grinder are fixed as they are. For example, as shown in Fig. 3, when grinding toward the ridgeline C of the object, by halting or fixing the sliding control at B, before C, there is no fear of the grinding disk coming into collision with the object to be ground at the next process initiation point D due to excessive lowering of the sliding device at C, and the damage of the abrasive disk between B and C is avoided. Further, when the robot moves from C to D, since the sliding control was fixed at point B, the sliding motor can be subjected to movement and thus rotated while preventing lowering of the slide. If said faculty of controlling the slide is not fixed at one time (B), the sliding device will be lowered to the lower limit in moving from C to D. On the robot reaching point D, the signal for fixing the sliding control is released and the relay 43 is operated, and the grinding process can start again.

It is also possible to control the grinding of an irregular surface of an object to be ground either by utilising or fixing the faculty of controlling the slide. For example, as shown in Fig. 4, in case of grinding the irregular excess metal by maintaining control of the slide, the initial irregularity also remains on the finishing surface in which the excess metal still remains and an intrusion into the base metal surface occurs. In the other case, as shown in Fig. 5, the preliminary grinding is started from the point A after the load setting value is made small, and the slide control is fixed at the point B such that the projecting portion of the excess metal is removed first. Since the load setting level is small, the consumption of the grinding disk by said preliminary grinding is less. Then the main grinding operation is carried out, while controlling the slide, to provide the carried out, while controlling the slide, to provide the plane final finished surface.

The operation by the signal for recovering the slide device to the home position will be described hereinafter. When the signal for returning to the home position is input from the controller, the reciprocal changing device 37 normally rotates the slide elevation motor 21 to lift the slide device and said slide device stops after reaching the upper limit switch 44, then momentarily said reciprocal changing device 37 rotates the slide elevation motor 21 reversely to lower the slide device and the slide device is stopped by the timer T₃. Thus, where the rotational speed of the motor 21 is constant, the respective relative locations of the slide device, and thus the grinder, are recovered to a constant state. By utilizing the above faculty, the robot is always programmed in the condition that the grinder returns to the home position and it is possible to return the grinder to said point at the time of actuating the apparatus or after replacing the grinding disk. The timer T₃ is so set that the upper central portion of the stroke of the slide device is the home position.

Other than the above described example, as means for recovering the grinder to the home position, it is possible that the location of the slider 22 of the sliding device is directly detected by a potentiometer and is maintained constant by actuating the elevation motor.

When the signal of stopping the control is input, the relays 41 and 42 are cut to stop both of the travelling motor 27 and the grinding motor 25, simultaneously the slide device is lifted by rotating the motor 21 and the slide is stopped by a timer T₄. By the above operation, since the rotation of the disk has stopped and the disk is spaced from the object to be ground, there is no fear of damage to the base metal surface. Further, lifting the slide prevents the grinding disk coming into collision with the object to be ground at the next grinding process initiation.

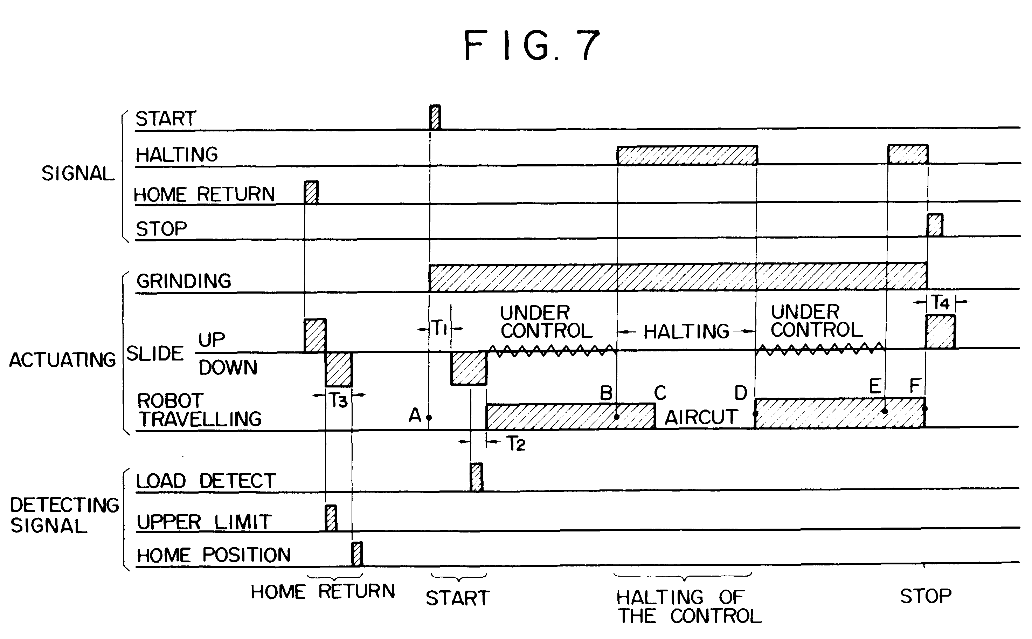

Fig. 7 shows a time chart of an operation comprising controlling of the slide, and the halting or fixing of the control and the air migration or the air cutting for the abrasive disk in the case of grinding an object in which the base metal surface is separated into two parts as shown in Fig. 3.

In accordance with the present invention, an industrial robot is used as a travelling device and the sliding device is attached on the wrist of the robot to lower the grinder to approach the object when the load current of the grinding motor is smaller than the set value, and to raise it relative to the object when the load current of the grinding motor is larger than the set value. This elevation is controlled in a single axis of the sliding direction by the sliding motor and the following capacity of the grinding disk is improved whilst simplifying controlling of the robot. That is, since the robot runs by detecting that the grinding is started, the predetermined grinding is possible even if the position of the object to be ground dislocates from the position which the robot has been programed to expect. It is also possible to grind an irregular or modified base metal surface smoothly and the grinder safely moves to the next process point thus rotating after entirely grinding to the extend of the ridgeline of the object. Further the apparatus made in accordance with the present invention does not damage the base metal surface such as an intrusion even if the grinding process is halted at any position of the metal surface to be ground.

## Claims

1. An automatic grinding apparatus containing:
a rotating grinder (24) comprising a grinding motor (25) and a grinding disk (26) actuated by said grinding motor (25), said grinding motor (25) having substantially no variation in RPM due to variation of load on said grinding disk, and a load current which is proportional to metal removal rate, characterized in that the apparatus includes;
a travelling device in the form of an articulated type or a cartesian co-ordinate type industrial robot having a wrist means thereon;
a sliding device attached to said wrist means of the industrial robot and said sliding device (20) on said robot (10) comprising an elevation motor (21) for adjusting the distance between said grinding disk (26) and said surface of the workpiece (50) to be ground and a slider (22) actuated by said elevation motor (21) and supporting said grinder (24) at the front surface thereof for raising and lowering said grinder (24), said sliding device (20) being capable of actuation independently of said travelling device;
a programmable controller for controlling said grinder (24) and sliding device (20) to start and stop the control thereof and to recover to a home position;
timer means (T₁) for generating a signal for actuating said sliding device (20) to move said grinding disk (26) towards the workpiece after the slip current of said grinding motor (25) becomes stable at initiation of grinding;
detecting means (38) outputting a driving signal to said travelling device (27) simultaneously with or after a time delay (T₂) after detecting that said disk (26) has contacted said surface to be ground (50) due to the variation of the load current of said grinding motor (25); and
means (37, 44, T₃) for recovering the relative location of said disk (26) and said sliding device (20) to a home condition following an indication from the controller.

2. An automatic grinding apparatus as claimed in claim 1 wherein;
said recovering means operates by regulating an actuating time of said elevation motor (21) from a limit condition adopted by the disk and sliding device following an indication from the controller.

3. An automatic grinding apparatus as claimed in claim 1 wherein:
said recovering means comprises means for controlling the relative location of said disk (26) and said sliding device (20) to a home condition by directly detecting, by a potentiometer, the variation of the slider position from a limit position.

4. An automatic grinding apparatus as claimed in claim 1 and further comprising:
means for fixing a control faculty of the sliding device (20) at a selected time during grinding to maintain the relative positions of the grinder (25) and the sliding device (26).

5. An automatic grinding apparatus as claimed in claim 1 and further comprising:
means for stopping rotation of the grinding motor (25) and actuating the sliding device (20) in a direction away from the workpiece to be ground at the end of the grinding process.

## Patentansprüche

1. Automatische Schleifvorrichtung mit:
einem rotierenden Schleifapparat (24) der einen Schleifmaschinenmotor (25) und eine durch diesen Schleifmaschinenmotor (25) in Bewegung versetzte Schleifscheibe (26) aufweist, wobei der Schleifmaschinenmotor (25) im wesentlichen keinen Schwankungen der Umdrehungszahl pro Minute (UPM) ausgesetzt ist, welche auf eine Veränderung der auf die Schleifscheibe wirkenden Belastung zurückzuführen wären, und einen zu dem Abtragungsleistungsgrad an Metall proportionalen Laststrom aufweist, dadurch gekennzeichnet, daß die Vorrichtung die nachfolgenden Elemente einschließt;
eine verfahrbare Vorrichtung in der Form eines industriellen Roboters der Sorte die über Gelenke oder der Sorte die nach Kartesischen Koordinaten arbeitet und die an sich mit einer Gelenkanordnung ausgestattet ist;
eine an die Gelenkanordnung des industriellen Roboters angeschlossene Gleitvorrichtung, wobei die Gleitvorrichtung (20) an dem Roboter (10) einen höhenverstellbaren Motor (21), zur Einstellung der Entfernung zwischen der Schleifscheibe (26) und der Oberfläche des zu schleifenden Werkstückes (50), sowie ein Gleitstück (22), welches durch den höhenverstellbaren Motor (21) betätigt wird und den Schleifapparat (24) an seiner vorderen Fläche zwecks Hebens und Senkens dieses Schleifapparates (24) trägt, beinhaltet, wobei die Gleitvorrichtung (20) in der Lage ist unabhängig von der verfahrbaren Vorrichtung betätigt zu werden;
eine programmierbare Regeleinrichtung zum Betätigen des Schleifapparates (24) und der Gleitvorrichtung (20), um die Steuerung derselben zu beginnen und zu beenden sowie dieselben wieder in eine Ausgangsposition zurückzuführen;
einen Zeitgeber (T₁) zur Erzeugung eines Signals zur Betätigung einer Gleitvorrichtung (20) zum Bewegen der Schleifscheibe (26) in die Richtung des Werkstückes, nachdem der Schlupfstrom des Schleifmaschinenmotors (25) bei der Einleitung des Schleifens beständig geworden ist;
ein Ortungsgerät (38) zur Ausgabe eines Treibsignals an die verfahrbare Vorrichtung (27) gleichzeitig mit oder anschließend an die Totzeit (T₂) nach der Feststellung, infolge der Veränderung des Laststromes des Schleifmaschinenmotors (25), daß die Schleifscheibe (26) mit der zu schleifenden Oberfläche (50) in Kontakt getreten ist; und
Mittel (37, 44, T₃) zur Rückstellung der relativen Stellung der Schleifscheibe (26) und der Gleitvorrichtung (20) in die Ausgangsbedingungen, im Anschluß an eine Angabe der Regeleinrichtung.

2. Automatische Schleifvorrichtung, wie sie unter Anspruch 1 beansprucht worden ist, in welcher;
die Rückstellungsmittel betrieben werden durch Einregelung einer Betätigungszeit des höhenverstellbaren Motors (21) ausgehend von einer durch die Schleifscheibe und die Gleitvorrichtung angenommenen Grenzbedingung im Anschluß an eine Angabe der Regeleinrichtung.

3. Automatische Schleifvorrichtung, wie sie unter Anspruch 1 beansprucht worden ist, in welcher;
die Rückstellungsmittel in sich die Hilfsmittel zur Regelung der relativen Anordnung der Schleifscheibe (26) und der Gleitvorrichtung (20), in Bezug auf eine Ausgangsbedingung, durch direktes Erfassen, mittels eines Potentiometers, der Änderung der Position des Gleitstückes gegenüber einer Grenzposition vereinigen.

4. Automatische Schleifvorrichtung, wie sie unter Anspruch 1 beansprucht worden ist und welche desweiteren aufweist;
Mittel zur Festlegung einer Kontrollfähigkeit der Gleitvorrichtung (20) an einem ausgewählten Zeitpunkt während des Schleifens zwecks Beibehaltung der relativen Positionen der Schleifmaschine (25) und der Schleifscheibe (26).

5. Automatische Schleifvorrichtung, wie sie unter Anspruch 1 beansprucht worden ist, und welche desweiteren aufweist;
Mittel zum Anhalten der Rotation des Schleifmaschinenmotors (25) und zur Betätigung der Gleitvorrichtung (20) in die Richtung weg von dem zu schleifenden Werkstück am Ende des Schleifvorganges.

## Revendications

1. Appareil automatique pour abraser, contenant:
une rectifieuse rotative (24) comprenant un moteur pour rectifieuse (25) et un disque de rectification (26) mis en mouvement par ledit moteur pour rectifieuse (25), moteur pour rectifieuse (25) qui ne montre pratiquement aucune variation des TPM (tours par minute) à la suite de la variation de la sollicitation s'exerçant sur ledit disque de rectification et qui reçoit un courant de charge qui est proportionnel au taux d'enlèvement de métal, caractérisé en ce que l'appareil englobe:
un dispositif de déplacement sous la forme d'un robot industriel du type à articulations ou du type à coordonnées cartésiennes portant sur lui des moyens d'articulation;
un dispositif de glissement attaché aux moyens d'articulation prémentionnés du robot industriel, alors que ledit dispositif de glissement (20) sur ledit robot (10) comporte un moteur de site (21). pour ajuster la distance entre ledit disque de rectification (26) et la surface de la pièce à travailler (50) devant être rectifiée, ainsi qu'une coulisse (22), actionnée par ledit moteur de site (21) et portant la rectifieuse (24) sur sa face frontale pour lever et baisser ladite rectifieuse (24), ledit dispositif de glissement (20) étant capable d'être mis en mouvement indépendamment dudit dispositif de déplacement ;
un mécanisme de réglage programmable pour commander ladite rectifieuse (24) et le dispositif de glissement (20) de manière à démarrer et à arrêter le réglage de ceux-ci et de rétablir la position de repos;
une minuterie (T₁) pour générer un signal destiné à actionner le dispositif de glissement (20) pour déplacer ledit disque de rectification (26) en direction de la pièce à travailler, une fois que le courant de glissement dudit moteur pour rectifieuse (25) devient stable lors du démarrage de la rectification;
des moyens de détection (38) émettant un signal d'attaque audit dispositif de déplacement (27) en parallèle avec un temps de retard (T₂), ou à la suite de celui-ci, après avoir détecté que ledit disque (26) est entré en contact avec ladite surface devant être soumise à abrasion (50) en raison de la variation du courant de charge dudit moteur pour rectifieuse (25); et
des moyens (37, 44, T₃) pour rétablir l'emplacement relatif dudit disque (26) et dudit dispositif de glissement (20) par rapport à un état de repos à la suite d'une indication du mécanisme de réglage.

2. Appareil automatique pour abraser, tel que revendiqué dans la revendication 1, dans lequel;
lesdits moyens de rétablissement travaillent en réglant un temps d'activité dudit moteur de site (21) à partir d'une condition limite adoptée par le disque et le dispositif de glissement à la suite d'une indication du mécanisme de réglage.

3. Appareil automatique pour abraser, tel que revendiqué dans la revendication 1, dans lequel;
lesdits moyens de rétablissement comportent des moyens pour asservir l'emplacement relatif dudit disque (26) ainsi que dudit dispositif de glissement (20) vers un état de repos en détectant directement, par l'intermédiaire d'un potentiomètre, la variation de la position de la coulisse par rapport à la position limite.

4. Appareil automatique pour abraser, tel que revendiqué dans la revendication 1 et comprenant en outre:
des moyens pour bloquer une faculté de commande du dispositif de glissement (20) à un moment choisi au cours de l'abrasion de sorte à maintenir les positions relatives de la rectifieuse (25) et du dispositif de glissement (26).

5. Appareil automatique pour abraser, tel que revendiqué dans la revendication 1 et comprenant en outre:
des moyens pour arrêter la rotation du moteur de la rectifieuse (25) et mettre en marche le dispositif de glissement (20) dans une direction s'écartant de la pièce à travailler devant être soumise à abrasion à la fin du processus d'abrasion.
